# EUROPEAN PATENT APPLICATION

(11) **EP 1 332 864 A1**
(43) Date of publication of application: **06.08.2003**
(21) Application number: 01974849.0
(22) Date of filing: 15.10.2001
(51) Int. Cl.: B29C 59/04

(54) **METHOD FOR PRODUCING EMBOSSED SHEET AND EMBOSSED SHEET**

(30) Priority: 18.10.2000 JP 2000318376
(71) Applicant: Idemitsu Unitech Co., Ltd., Tokyo 112-0002 (JP)
(72) Inventor: FUJII, Atsushi, Sodegaura-shi, Chiba 299-0205 (JP); TAKUBO, Toyokazu, Sodegaura-shi, Chiba 299-0205 (JP)
(74) Representative: Hucker, Charlotte Jane
(86) International application number: JP0109027
(87) International publication number: WO02032653

(57) **Abstract**

A method for producing an embossed sheet having a fine emboss pattern with high productivity and safety. The cooled and solidified base sheet 25 is pressed by the rotating pressing roll 24 and the embossing roll 23 while laminating the molten resin 27 on the embossing roll side surface of the base sheet.

## Description

### Technical Field

The present invention relates to a method for producing an embossed sheet and an embossed sheet.

### Background Art

An embosses sheet made from thermoplastic resin with embossed patterns formed on one surface thereof is useful as a lens function sheet such as a Fresnel lens sheet, a lenticular lens sheet, and a prism lens sheet. For instance, a retroreflective sheet (a plastic-made light reflector) with a cube corner type of microprism processed thereon is now widely used in the fields of security, indicators, fashions, constructions, or the like.

The retroreflective sheets now used in the market include glass-bead type one and cube comer (three-dimensional corner) type one. Generally the cube corner type of retroreflective sheet is more excellent in the long range visibility and reflection brightness as compares to the glass-bead type retroreflective sheet.

In production of the cube corner type of retroreflective sheet, it is required to accurately transfer an embossing pattern on a die for forming a embossed pattern onto a base sheet.

For the purpose as described above, it is important that a thermoplastic sheet is pressed at an appropriate temperature and under an appropriate pressure to a die for forming an embossed pattern.

As the main method for producing a retroreflective sheet satisfying the requirements as described above, there are the vacuum press method and the rolling method (Refer to Japanese Patent Laid-Open Publication No. 2000-52421).

In the vacuum press method, an embossed flat plate with a fine surface is used, heat press is performed in vacuum, and after the plate is cooled, the die is separated from the embossed flat plate.

In the rolling method, a surface to be subjected to embossing of a base is softened, namely softened by flames or by heating without using flames, and then is subjected to embossing.

In the vacuum press method described above, however, the production speed is low, and the apparatus is complicated and large.

With the rolling method, as a thermoplastic sheet is rapidly heated, it is difficult to heat the sheet uniformly, and in addition sometimes an operator may be exposed to dangerous situations.

It is an object of the present invention to provide a safe method for producing an embossed sheet with fine embossed patterns and an embossed sheet produced by the method.

### Disclosure of the Invention

The method for producing an embossed sheet according to the present invention is characterized in that an embossed sheet is obtained by pressing a cooled and solidified base sheet with a rolling pressing roll and an embossing roll laminating and melting-bonding a molten resin to the base sheet as well as to the embossing roll.

The materials available for the base sheet include polystyrene (PS), acrylic resins such as polymethyl methacrylate (PMMA), polycarbonate (PC), polyvinyl chloride (PVC), polyethylene (PE), and polypropylene (PP).

The embossing roll is a roll having, as its main components, an embossing plate for transferring an embossed pattern provided as an outermost layer, and an elastic member provided on a rear surface of the embossing plate. Also the embossing roll is a metallic roll with embossed patterns engraved thereon.

The pressing roll can be made by, for instance, winding silicone rubber or the like around a metallic roll.

With the present invention as described above, as an embossing pattern is transferred before the molten resin pushed out from a die is cooled and solidified, it is not necessary to rapidly heat the resin for embossing, so that the dangers as found in the conventional technology never occur.

Further as it is necessary to employ an embossing roll for only one of two pressing rolls in a sheet forming machine, so that the embossing apparatus can be simplified with the size reduced.

Further as a molten resin is laminated and melting-bonded to a base sheet concurrently with the pressing roll and the embossing roll, the productivity is high, and it is possible to provide fine and precise embossed patterns.

In the method for producing an embossed sheet according to the present invention, the molten resin is decided taking into considerations a combination thereof with the base sheet, and it is preferable that both the base sheet and the molten resin comprises the same material.

In a case where a material for the base sheet is any of polycarbonate (PC), polyvinyl chloride (PVC), polypropylene (PP), and polymethyl methacrylate (PMMA), the material of the molten resin is the same as that of the base sheet.

As described above, by using the same material for both the base sheet and the molten resin, the molten resin is well melting-bonded and adhered to the base sheet.

In the method for producing an embossed sheet according to the present invention, it is preferable that, when a material of the base sheet is different from that of the molten resin, the material of the molten resin is a thermally adhesive material.

For instance, when a material of the base sheet is polycarbonate (PC), the molten resin is preferably made of a thermally adhesive material such as an acrylic resin, and when a material of the base sheet is polypropylene (PP), ionomer may be used as a material of the molten resin.

By using different materials as describe above, different characteristics of various resins can be combined, so that a sheet not only adapted to embossing but also having the versatility can be produced.

In the method for producing an embossed sheet according to the present invention, a surface material of the pressing roll is preferably an elastic material.

For instance, such materials as silicone-based rubber or fluorine-based rubber may be used as the elastic material. The hardness of the elastic material should preferably be in the range of 60 to 90 degrees (based on JIS Z 2246 Type A).

Because the surface material of the pressing roll according to the present invention is an elastic material, when a sheet is pressed by the pressing roll, a pressed area of the sheet increases, so that embossing can be performed finely and precisely.

In the method for producing an embossed sheet according to the present invention, the embossing roll should preferably have a cooling function.

When the embossing roll has a cooling mechanism, the sheet can be cooled immediately after embossing is finished, so that deformation of the embossed surface such as sags associated with the cooling process can be prevented, and a high precision embossed sheet can be obtained.

In the method for producing an embossed sheet according to claim 8, a pressing force of the pressing roll and that of the embossing roll should preferably be in the range from 50000 to 1200000 N/m (which correspond to 5 to 120 kgf/cm respectively when converted).

When the pressing force is less than 50000 N/m, the pressure to the embossed sheet is insufficient, so that the embossing capability is low, and on the other hand, when the pressing force is larger than 1200000 N/m, the pressing force to the embossed sheet is too large, and in that case, the thickness of the embossed molten resin becomes too small, so that the durability is disadvantageously low. The pressing force should preferably be in the range from 40000 to 800000 N/m (4 to 80 kgf/cm respectively when converted).

In the method for producing the embossed sheet according to the present invention, the thickness of the cooled and solidified base sheet should preferably be larger than that of the molten resin layer.

When the thickness of the base sheet is smaller than that of the molten resin layer, the base sheet is softened due to heat generated from the molten resin, so that the pressing force is delivered insufficiently, and in that case, the die can not sufficiently be filled with resin, or bank marks may be generated.

Therefore, by making the thickness of the base sheet sufficiently large to prevent the base sheet from being softened, generation of the bank marks can be prevented.

In the method for producing the embossed sheet according to the present invention, the draw-out speed by the pressing roll as well as the embossing roll should preferably be not less than 10 m/min.

When the draw-out speed is less than 10 m/min, the molten resin is cooled down before the molten resin reaches the embossing roll, and in that case the embossing by pressing may not sufficiently be performed.

Therefore, by setting the draw-out speed to a value not less than 10 m/min, high precision embossing can accurately be carried out by the embossing roll.

The embossed sheet according to the present invention is obtained by the method for producing an embossed sheet according to the present invention as described above, and the obtained sheet is preferably a retroreflective sheet.

Herein the retroreflectivity of the retroreflective sheet is measured by the method stipulated in JIS Z 8714, and the retroreflectivity is largely affected by precision in embossing.

Therefore, as the embossed sheet obtained by means of the production method according to the present invention described above has a high precision embossed surface, the excellent retroreflectivity satisfying the requirements in JIS can be expected.

Because of the excellent retroreflectivity, the embossed sheet according to the present invention can be used in various fields including security, indicators, fashions, and constructions.

### Brief Description of Drawings

Fig. 1 is a cross-sectional view showing a cross-section of an embossed sheet; and
Fig. 2 is a general block diagram of an embossed sheet production apparatus according to the present invention.

### Best mode for Carrying out the Invention

Embodiments of the present invention are described hereinafter with reference to the related drawings.

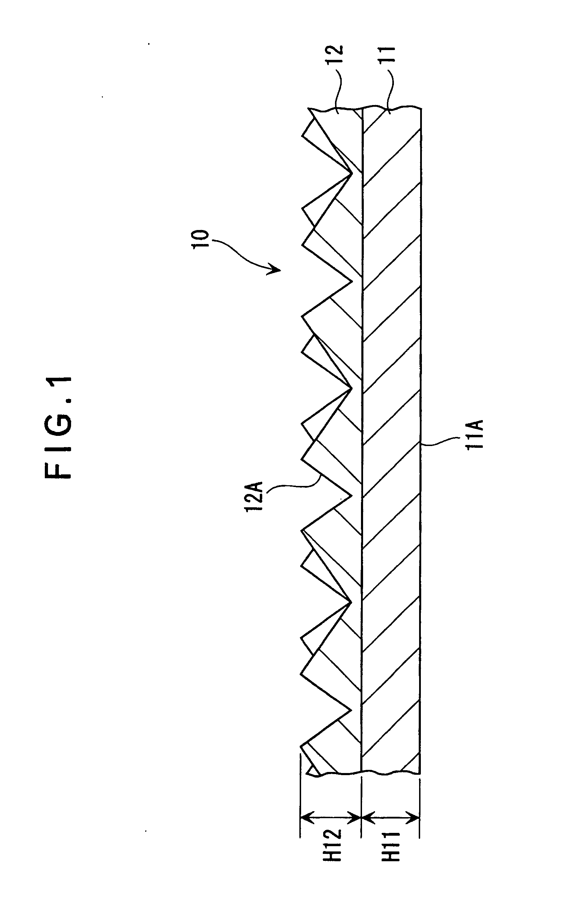

Fig. 1 shows an embossed sheet 10 according to an embodiment of the present invention.

The embossed sheet 10 is a retroreflective sheet comprising a base material layer 11 comprising a base sheet and an embossed layer 12 formed by depositing a molten resin on the base material layer 11 and cooling and solidifying the molten resin.

The base material layer 11 is a sheet made of such a material as polycarbonate (PC), polyvinyl chloride (PVC), polymethyl methacrylate (PMMA), or polypropylene (PP), and is supplied as a raw material roll formed by, for instance, extrusion molding with the specified thickness.

In the base material layer 11, a surface 11A in the opposite side from the laminated surface of the embossed layer 12 is mirror-finished.

The embossed layer 12 comprises either the same material as that or a material different from that of the base layer 11. In this embossed layer 12, a surface in the opposite side from the laminated surface of the base sheet layer 11 is embossed to a cube corner prism surface 12A.

The thickness H11 of the base material 11 is larger than that H12 of the embossed layer 12.

The light introduced at the incidence angle of 0 degrees from the surface 11A of the base material layer 11 of the embossed sheet 10 is totally reflected repeatedly on the cube comer prism 12A of the embossed layer 12, and returns in the direction along the normal line to the surface 11A.

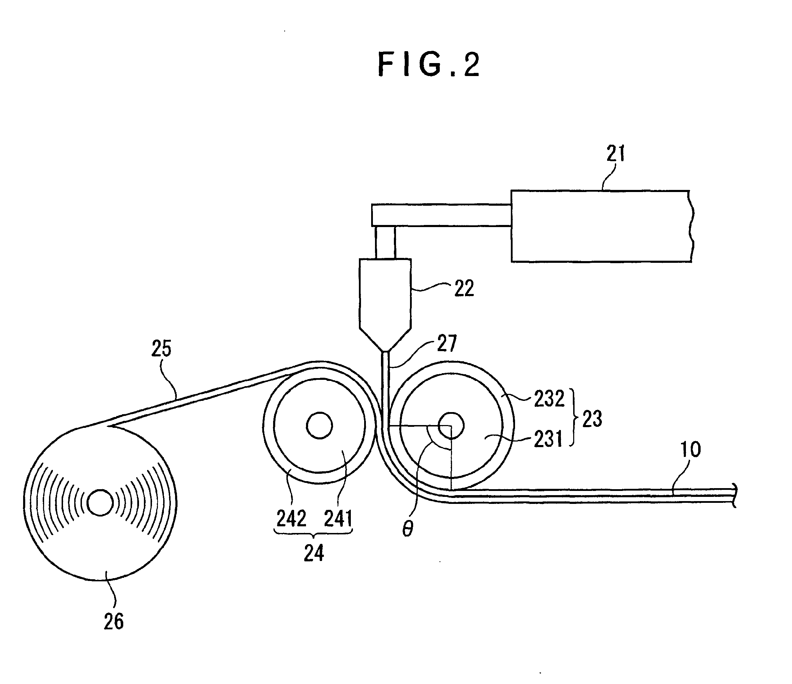

The production apparatus for producing the embossed sheet 10 as described above comprises, as shown in Fig. 2, an extrusion machine 21, a die 22 attached to this extrusion machine 21, and an embossing roll 23, a press role 24 positioned in the opposite side from the embossing roll 23, and a roll 26 for feeding out a base sheet 25 cooled and solidified.

The extrusion machine 21 described above is a section for fusing and kneading a chip-formed resin, and is a monoaxial extrusion machine in this embodiment. The die 22 is a die used to extrude the molten resin 27 in a sheet-like form, and a T die is used in this embodiment. Types of the T die includes, but not limited to, a straight manifold type, a coat hanger type, a combination of the two types, and any type may be selected according to a material to be used.

The embossing roll is a section for forming an embossed surface on a surface of the sheet-formed molten resin extruded from the T die, and can be formed by winding or adhering and fixing an embossing plate 232 for emboss pattern transfer around a metallic roll 231 or to a surface thereof.

Provided inside this embossing roll 23 is a cooling mechanism in which cooling water is circulated, and the embossed molten resin 27 is cooled and solidified in the section indicated by θ in Fig. 2.

Herein the pattern is not always an array of repeated unit patterns, and may be a random array of structures each having the same or a different size respectively. The pattern is mechanically machined at least in one section of the embossing roll. Each structure of a pattern is called emboss. Number of and a space between the embosses, and characteristics of each discrete emboss such as, for instance, a depth of the emboss, an angle of sharp edge, and a form thereof can be changed according to the necessity.

The pressing roll 24 is a section for generating a pressing force for embossing, and is formed by winding an elastic material 242 made of silicone rubber or the like around a peripheral surface of the metallic roll 241. The elastic material 242 is wounded therearound so that the pressure is homogeneously loaded to the pressed surface.

The pressing force by this pressing roll 24 may be set in the range from 50000 to 1200000 N/m (corresponding to 5 to 120 kgf/cm respectively when converted), and more preferably in the range from 40000 to 800000 N/m (corresponding to 4 to 80 kgf/cm respectively when converted).

By using this production apparatus, the embossed sheet 10 is produced as described below.
(1) At first, the sheet-formed molten resin 27 extruded from the die 22 is fed together with a base sheet 25 to between the embossing roll 23 and the pressing roll 24.
(2) The laminated material consisting of the base sheet 25 and the molten resin 27 is energized by the pressing roll 24 in the direction of thickness with the pressing force in the range from 50000 to 1200000 N/m (corresponding to 5 to 120 kgf/cm respectively when converted) , and a cube corner prism surface is formed on a surface of the molten resin 27.
(3) After the cube comer prism surface is formed, the laminated material consisting of the base sheet 25 and the molten resin 27 is cooled in the section θ by a cooling mechanism in the embossing roll 23 or by an external cooling mechanism not shown in the figure, and then is separated from the embossing roll 23 and is wound up.

In this embodiment, the wind-up speed in this step is set to 10 m/min or more so that the molten resin 27 extruded from the die 22 reaches the embossing roll 23 before it is cooled and solidified.

With the embodiment of the present invention as described above, there are provided the advantages as described below.

At first, as the emboss pattern is transferred before the molten resin 27 extruded from the die 22 is cooled and solidified, rapid heating is not required in embossing, and dangers associated with rapid heating as those in the conventional technology never occur.

In addition, it is required to employ the embossing roll 23 only for either one of the pressing rolls 24 in the sheet forming apparatus, so that the embossing apparatus never becomes larger nor complicated,

Further as lamination of the molten resin 27 on the base sheet 25 and embossing thereof are carried out by the pressing roll 24 and the embossing roll 23 concurrently, which insured the high productivity and also allows for fine and precise embossing.

As the surface material of the pressing roll 24 is an elastic material, so that a contact area of the pressing roll 24 with the sheet increases, and therefore embossing can be performed finely and precisely.

Further as the embossing roll 23 has a cooling mechanism, the sheet can immediately be cooled after embossing, so that deformation of the embossed surface such as sags associated with the cooling process can be prevented, and the high precision embossed sheet 10 can be obtained.

In addition, by setting the pressing force of the pressing roll 24 to the range from 50000 to 1200000 N/m, the molten resin 27 can accurately be embossed.

By setting the draw-out speed for drawing out the embossed sheet 10 to 10 m/min or more, high precision embossing can be performed by accurately carrying out the processing with the embossing roll 23.

As the thickness of the base sheet 25 is larger than that of the molten resin layer, generation of bank marks can be prevented.

The present invention is not limited to the embodiment described above, and modifications and improvements within the range in which the object of the present invention can be achieved is included in the present invention.

For instance, in the embodiment described above, a roll formed by winding the emboss plate 232 for transferring an emboss pattern around an external peripheral surface of the metallic roll 231 is used as the embossing roll 23, but the present invention is not limited to this embodiment, and a metallic roll with a prespecified emboss pattern engraved on a surface thereof may be employed.

In the embodiment described above, a roll formed by winding the elastic material 242 made of silicone rubber or the like around a surface of the metallic roll 241 is used as the pressing roll 24, but the present invention is not limited to this embodiment, and a roll, which is itself an elastic material, may be employed.

Specific structure and forms for carrying out the present invention may be changed within the range in which the object of the present invention can be achieved.

Specific embodiments of the present invention are described below.

### (Examples 1 to 3)

Thee specific conditions for production in the examples are as described below.

Embossing roll; material: Ni, Width: 300 mm, inner diameter: 254 mm

Emboss pattern: cube corner prism pattern, length of an edge: 173 µm, height: 86 µm (regular triangular pyramid)

Pressing roll; surface material: silicone rubber, hardness; 80 degrees (JIS Z 2246, type A), width: 300 mm, inner diameter: 400 mm

In the examples 1 to 3, as shown in Table 1, the materials and thicknesses of the base sheets, materials and thicknesses of the molten resin layers, and pressing forces of the pressing rolls and embossing rolls are different respectively.

### (Comparative example 1)

The vacuum press method based on the conventional technology is described below as a comparative example.

In the apparatus employed in this example, the size of the press is as follows; the length in the longitudinal direction:300 mm, and the length in the lateral direction: 300 mm, and the apparatus is based on the batch system in which the presses are arrayed in five stages. The heating time for melting is 30 minutes, and the cooling time for solidification is 30 minutes.

Materials and thicknesses of the base sheets, materials and thicknesses of the molten resin layers, pressing forces by the pressing rolls and the embossing rolls, draw-out speed of the pressing rolls and the embossing rolls, and other conditions in the examples and the comparative example are as shown in Table 1.

Brightness was measured as a condition for measurement of precision in the retroreflectivity of each embossed sheet.

**Table 1**

| | Material and thickness of base sheet(µm) | Material and thickness of molten resin layer(µm) | Pressing forces of pressing roll and emboss roll(N/m) | Draw-out speed of pressing roll and emboss roll(m/min) | Brightness (cd/lux/m²) |
|---|---|---|---|---|---|
| Example 1 | PP(150) | PP(100) | 60000 | 20 | 130 |
| Example 2 | PP(150) | PP(100) | 80000 | 20 | 220 |
| Example 3 | PP(150) | PMMA(100) | 80000 | 20 | 220 |
| Comparative example 1 | pp | - | - | 0.025 | - |

As shown in Table 1 above, the embossed sheets in Examples 1 to 3 are more excellent in the term of productivity, because the draw-out speed is higher, as compared to that in Comparative Example 1. Further Table 1 shows that embossed sheets also excellent in the retroreflectivity were obtained in the Examples 1 to 3.

### Industrial Availability

The embossed sheets according to the present invention are useful as lens function sheets including the Fresnel lens sheet having emboss patterns, lenticular lens sheets, and prism lens sheets. For instance, the retroreflective sheet with the cube corner type of microprism processed thereon (plastic light reflector) can be used in the various fields including, but not limited to, security, indicators, fashion, and construction.

## Claims

1. A method for producing an embossed sheet which comprises pressing a cooled and solidified base sheet by a rotating pressing roll and an embossing roll, while laminating a molten resin on the embossing roll side surface of the base sheet.

2. The method for producing an embossed sheet according to claim 1, wherein a material of the base sheet is the same as that of the molten resin.

3. The method for producing an embossed sheet according to claim 2, wherein a material of the base sheet and the molten resin is selected from the group consisting of polycarbonate (PC), polyvinyl chloride (PVC), polypropylene (PP), and polymethyl methacrylate (PMMA).

4. The method for producing an embossed sheet according to claim 1, wherein a material of the base sheet is different from that of the molten resin, and the material of said molten resin is thermally adhesive.

5. The method for producing an embossed sheet according to claim 4, wherein a material of the base sheet is polycarbonate, and a material of the molten resin is polymethyl methacrylate.

6. The method for producing an embossed sheet according to any of claims 1 to 5, wherein a surface material of the pressing roll is an elastic material.

7. The method for producing an embossed sheet according to any of claims 1 to 6, wherein the embossing roll has a cooling mechanism.

8. The method for producing an embossed sheet according to any of claims 1 to 7, wherein the pressing forces of the pressing roll and the embossing roll are in the range from 50000 to 1200000 N/m.

9. The method for producing an embossed sheet according to any of claims 1 to 8, wherein the thickness of the cooled and solidified base sheet is larger than that of the molten resin layer.

10. The method for producing an embossed sheet according to any of claims 1 to 9, wherein the draw-out speed by the pressing roll and the embossing roll is 10 m/min or more.

11. An embossed sheet produced by the method for producing an embossed sheet according to any of claims 1 to 10.

12. The embossed sheet according to claim 11, wherein the embossed sheet is a retroreflective sheet.
